# DEMANDE DE BREVET EUROPEEN

(11) **EP 2 521 072 A1**
(43) Date de publication de la demande: **07.11.2012**
(21) Numéro de dépôt: 11305541.2
(22) Date de dépôt: 06.05.2011
(51) Int. Cl.: G06K 19/07

(54) **Dispositif de communication radiofréquence comportant une alimentation d'origine radiofréquence assistée**

(71) Demandeur: Gemalto SA, 92190 Meudon (FR)
(72) Inventeur: Thill, Michel, 78340 Les Clayes sour Bois (FR); Arnoux, Christophe, 13390 Auriol (FR)

(57) **Abrégé**

L'invention concerne un dispositif de communication radiofréquence (F1) comportant:
- des moyens de connexion (3) connectant ou destinés à connecter électriquement un composant à circuit intégré (SIM),
- des moyens de sélection (2, 4) pour sélectionner une alimentation en courant d'origine électromagnétique (RF) de ce composant ;

Le dispositif se distingue en ce qu'il comprend une source alternative d'alimentation (b3, c3) pour une alimentation directe du composant (SIM), ladite source alternative étant utilisée uniquement pour pallier une éventuelle insuffisance du courant d'alimentation d'origine électromagnétique reçu par le composant.

L'invention concerne également le procédé correspondant.

## Description

L'invention concerne un dispositif de communication radiofréquence comportant des moyens d'alimentation en énergie électrique d'origine électromagnétique pour alimenter un composant.

En particulier, l'invention concerne un téléphone portable (mobile) comprenant une batterie alimentant en énergie un circuit radiofréquence de proximité NFC (Near Field Communication en anglais) et mettant en oeuvre un mode dans lequel tout ou partie de l'alimentation en énergie du mobile est coupé, notamment l'alimentation d'un module d'identification d'abonné (SIM, USIM) fixe ou amovible au profit d'une alimentation d'origine électromagnétique.

Le circuit radiofréquence de proximité NFC est de préférence intégré dans un flexible configuré pour s'intercaler entre la carte SIM et son connecteur dans le mobile. Toutefois, le circuit NFC peut être intégré d'usine sous forme amovible ou fixe dans des dispositifs de télécommunication, tels que téléphones portables, assistants personnels PDA, ordinateurs portables, etc.

Les normes ISO/IEC 14443 et ETSI TS 102 622 V7 prévoient un mode de fonctionnement (Emulation carte sans contact) de la communication radiofréquence de proximité dans lequel le téléphone portable (ou au moins la partie radiofréquence de proximité du téléphone, comprenant un contrôleur NFC avec un module d'identification d'abonné) se comporte comme une carte sans-contact ou une étiquette électronique passive vis-à-vis d'un lecteur émetteur de champ électromagnétique. Ce mode émule une carte sans-contact ou équivalent pour le téléphone mobile. Aujourd'hui, dans le mode de fonctionnement « carte sans contact » d'un téléphone avec fonction NFC peut ne pas être totalement satisfaisant ou conforme au standard ou peut présenter des défaillances de fonctionnement.

En outre, il est difficile d'apporter une fonction NFC à un téléphone qui est dépourvu d'un contrôleur NFC. C'est d'autant plus difficile si on souhaite un lien SWP (Single Wire Protocol) entre le contrôleur NFC et la SIM du téléphone portable.

Les tentatives d'intégration d'un circuit NFC ou radiofréquence dans un téléphone se heurtent à des problèmes de dimensions et/ou d'espace disponible dans le téléphone pour intégrer un circuit NFC ainsi qu'au problème de l'environnement métallique du téléphone engendrant des perturbations électromagnétiques. Elles se heurtent également à un impact néfaste plus ou moins imprévisible de la batterie du téléphone sur les caractéristiques radiofréquences de la fonction NFC.

Les différentes contraintes d'implémentation de ce système NFC dans un environnement téléphone mobile font que le fonctionnement sans-contact se dégrade. Ces dégradations sont liées à deux principales problématiques :
- Une dimension d'antenne plus réduite que celle d'une carte sans-contact ;
- Un environnement radiofréquence très hostile:
   obstacles métalliques et perturbations par les autres radiofréquences.

La dégradation de fonctionnement reste encore acceptable quand le système sans-contact est alimenté par le téléphone, par contre elle devient très importante quand le téléphone ne fournit pas l'énergie (batterie déchargée ou téléphone éteint, le système sans-contact (circuit NFC + composant tel qu'une carte) est exclusivement alimenté par le champ radiofréquence RF.

Ces systèmes sans-contact NFC vont être utilisés dans des parcs installés (transport, paiement) où la qualité requise de communication est identique à celle d'une carte sans-contact ; Il est donc impératif de garantir un fonctionnement à l'utilisateur quel que soit l'état énergétique de son téléphone.

On connait d'autre part des cartes sans-contact dotées d'une batterie fine dans l'épaisseur du corps de carte pour améliorer la portée de communication sans-contact ou permettre des fonctions arithmétiques ou cryptographique intégrées ou afficher des données. De telles cartes sont commercialisées notamment par la société « Solicore ».

Ces cartes comprennent des circuits radiofréquences passifs recevant directement le flux électromagnétique pour s'alimenter directement. Il ne s'agit pas de circuit NFC alimentant un circuit intégré ou autre composant distinct et externe au circuit radiofréquence. Ces cartes ne mettent pas en oeuvre une fonction lecteur d'objet sans contact ou de carte sans contact.

Le problème à résoudre est de garantir une même qualité de fonctionnement de l'application sans contact, que le système sans contact soit alimenté par le téléphone ou par le champ RF.

L'invention consiste à intégrer ou associer une source d'énergie telle qu'une batterie fine, au moins une capacité au composant NFC ou CLF pour « booster» ou répondre aux besoins de consommation de courant, notamment ponctuels ou lors des transactions radiofréquences. Ces besoins peuvent survenir pendant certaines phases d'une transaction sans-contact radiofréquences, notamment la phase initiale ou de démarrage. L'invention permet de garantir un fonctionnement normal du composant via une consommation normale de courant du composant pendant toute la durée de la transaction radiofréquence. La batterie supplémentaire est chargée, de préférence par la batterie principale du téléphone quand elle est opérationnelle.

L'invention n'a pas d'impact significatif sur le fonctionnement du dispositif hôte tel un mobile, la source alternative d'énergie étant rechargée avec des courants extrêmement faibles qui ne perturbent pas le fonctionnement du dispositif hôte.

Contrairement à une carte à batterie fine de l'art antérieur visée précédemment, l'invention n'amène pas un mode permanent d'énergie mais une garantie d'utiliser cette énergie uniquement dans le cas d'urgence du téléphone déchargé ou éteint, ceci permet d'envisager l'utilisation d'objets de stockage d'énergie ayant de très faibles capacités.

L'invention a donc pour objet un dispositif de communication radiofréquence comportant des moyens de connexion connectant ou destinés à connecter électriquement un composant à circuit intégré (SIM),
- des moyens de sélection pour sélectionner une alimentation en courant d'origine électromagnétique de ce composant ; Le dispositif se distingue en ce qu'il comprend une source alternative d'alimentation pour une alimentation directe du composant (SIM), ladite source alternative étant utilisée uniquement pour pallier une éventuelle insuffisance du courant d'alimentation d'origine électromagnétique reçu par le composant.

Ainsi, l'invention permet de stimuler ou compenser ou pallier l'insuffisance d'alimentation principale ou d'origine radiofréquence prévue par le dispositif.

Selon d'autres caractéristiques du dispositif :
- Il comprend un mode (EC) de communication en émulation carte sans-contact ou configuration équivalente, ledit mode présentant une configuration d'alimentation du composant (SIM) par une source d'origine électromagnétique (RF) en substitution d'une première source (B1) comprenant une batterie principale, des moyens de maintien d'un niveau d'alimentation en courant du composant par ladite source alternative, directement auprès de lui, dans le cas d'un besoin de courant d'alimentation au cours d'une communication radiofréquence dans ce mode d'émulation (EC) ;
- La source alternative comprend une batterie secondaire et/ou au moins une capacité ;
- La source alternative est rechargeable par une batterie principale du dispositif hébergeant le système NFC ;
- La source alternative intervient en cas de détection d'un mode de fonctionnement dans lequel l'alimentation en courant est d'origine électromagnétique ;
- Le composant (SIM) comprend un module d'identification d'abonné à un réseau de télécommunication ou une puce de circuit intégré ou une carte du type UICC.
- Le dispositif comprend un contrôleur NFC et une connexion reliant ou destinée à relier le contrôleur NFC au composant (SIM) pour lui fournir une alimentation d'origine électromagnétique, une connexion directe de la source alternative au composant (SIM) ou via un moyen gestionnaire de l'alimentation alternative et/ou moyen de conditionnement de ladite source alternative.
- Le dispositif comprend un moyen gestionnaire d'alimentation alternative pour gérer une alimentation directe alternative du composant (SIM), un circuit de charge de la source alternative connecté à la batterie principale, un circuit de détection de champ électromagnétique intervenant avec ledit gestionnaire pour inhiber une décharge de la source alternative vers le composant (SIM) en l'absence de détection de champ électromagnétique et pour autoriser la décharge dans le cas contraire ;
- La batterie ou au moins la capacité est fixée sur une portion d'un dispositif NFC flexible comprenant l'antenne ;
- Le dispositif comporte un contrôleur NFC, des plots de connexion pour connecter d'une part une batterie principale d'alimentation d'un dispositif hôte et d'autre part un module d'identification d'abonné (SIM) ;
- La batterie et/ou au moins la capacité et/ou ledit moyen gestionnaire d'alimentation alternative sont fixés ou intégrés à un composant électronique qui peut constituer ou comprendre un contrôleur NFC et/ou un module d'identification d'abonné (SIM) ;
- Le dispositif hôte est un téléphone mobile.

L'invention a également pour objet un procédé de communication radiofréquence mettant en oeuvre au moins un composant à circuit intégré (SIM) et des moyens de sélection d'une alimentation en courant d'origine électromagnétique pour alimenter ce composant ;

Le procédé se distingue en ce qu'il comprend une étape d'alimentation alternative directe du composant par une source alternative, ladite source alternative étant utilisée uniquement pour pallier une éventuelle insuffisance du courant d'alimentation d'origine électromagnétique auprès du composant.

L'invention permet ainsi un mode fonctionnement du mobile conforme aux standards mais alimenté au moins sur une courte durée de démarrage de transaction comme s'il était en permanence en dehors du mode émulation carte.

L'invention permet d'avoir à tout moment la garantie d'un fonctionnement optimisé du système NFC dans un téléphone mobile qu'il soit ajouté par la suite ou prévu d'usine.

L'invention est décrite en relation avec des exemples illustrés sur les figures suivantes:
- La figure 1 illustre un système NFC souple F de l'art antérieur;
- La figure 2 illustre le système F en cours d'insertion dans un appareil de télécommunication 5;
- La figure 3 illustre une vue externe d'un système NFC souple conforme à l'invention;
- La figure 4 illustre un premier mode de réalisation du circuit d'alimentation conforme à l'invention ;
- La figure 5 illustre un second mode de réalisation du circuit d'alimentation conforme à l'invention ;
- La figure 6 illustre un appareil doté à sa fabrication du circuit d'alimentation conforme à l'invention ;
- La figure 7 illustre des étapes du procédé conformément à plusieurs modes de mise en oeuvre ;
- La figure 8 illustre un composant de type CMS agencé avec tout ou partie de l'invention ; Il décrit en particulier, un contrôleur NFC ou SIM combiné à un circuit comportant une mini batterie ou des capacités.

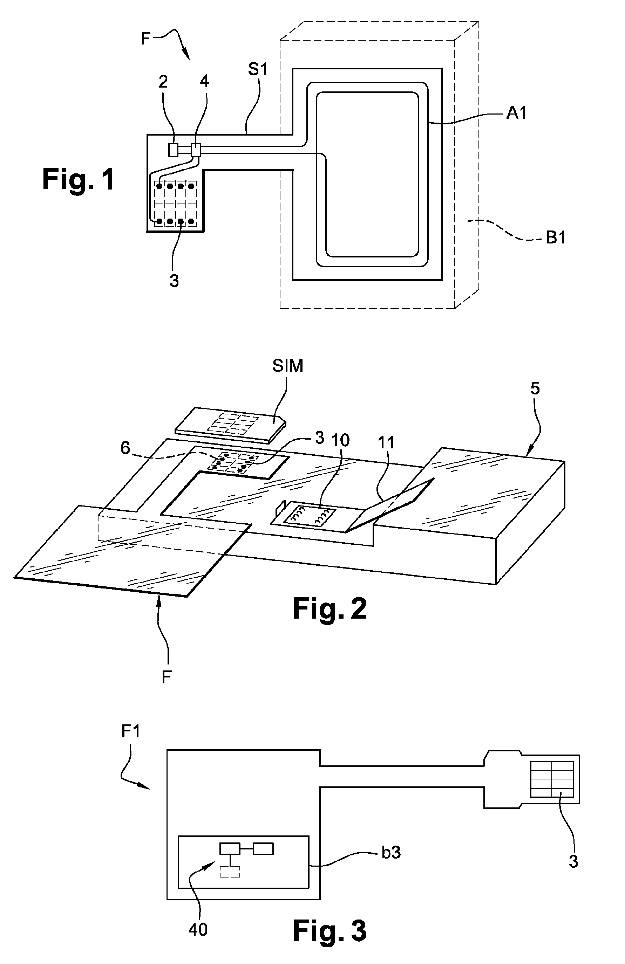

La figure 1 illustre un système NFC souple de l'art antérieur ; il comprend un support souple S1 portant une antenne radiofréquence A1, un contrôleur NFC (2), des moyens de gestion d'alimentation (4) du contrôleur NFC reliés ou étant configurés pour pouvoir être reliés à la batterie et/ou à l'antenne radiofréquence A1, un connecteur (3, 6) à plots 3 et à plages de contact 6 respectivement débouchant ou disposées sur une des deux faces principales d'une partie destinée à venir s'interfacer entre un connecteur 10 (connecteur à lames ou ressorts) d'appareil de télécommunication 5 pour module SIM et des plages de contact du module SIM. L'appareil peut être aussi un appareil de communication comme un assistant personnel ou tout appareil comportant une batterie que l'on souhaite doter de moyens de communication sans contact. Le cas échéant, le contrôleur NFC peut comprendre en interne les moyens de gestion d'alimentation 4.

Ce système (S1) vient se loger dans un dispositif hôte 5 tel un appareil de télécommunication, l'antenne pouvant être, par exemple, plaquée contre une batterie B1 (fig. 1) de ce dispositif hôte.

A la figure 2, le système NFC souple (F) est en cours d'insertion dans un appareil de télécommunication 5. La partie connecteur 3, 6 est destinée à s'interfacer entre le connecteur 10 du mobile 5 et un module SIM maintenu (par un organe de maintien ou volet 11) en contact avec le connecteur 10. La partie de l'antenne A1 peut se plier de manière flexible et se placer par exemple, contre la surface principale de la batterie (B1).

La figure 3 illustre un système NFC souple F1 comprenant le système souple de l'art antérieur F équipé du dispositif de l'invention. Il comprend notamment une batterie fine souple b3 et un circuit d'alimentation supplémentaire 40 conforme à l'invention pour gérer l'utilisation de cette batterie supplémentaire comme détaillé ci-après.

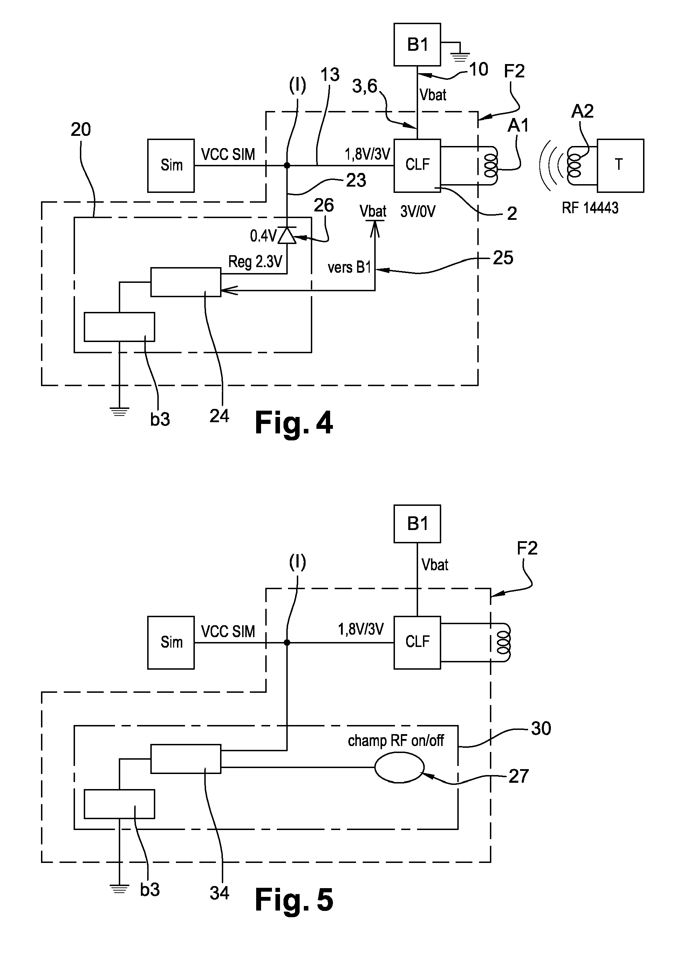

A la figure 4 est illustré un schéma bloc d'un mode de réalisation d'un dispositif d'alimentation 20 pour dispositif de communication radiofréquence F1 conforme à l'invention ; le dispositif de communication comporte au moins un composant à circuit intégré (SIM ou autre) ou des moyens de connexion à ce composant (SIM), comme précédemment, des moyens 2, 4 de sélection d'une alimentation en courant de ce composant provenant d'un champ électromagnétique d'un lecteur externe (T, A2).

Dans l'exemple, le dispositif est le système NFC souple (F) qui comprend une puce de circuit intégré 2 comme composant radiofréquence ou contrôleur de type NFC (CLF) ; Le contrôleur NFC est relié à une antenne A1 d'émission et/ou réception de champ électromagnétique ; Le contrôleur 2 comprend des moyens de connexion 13 à la batterie ; Ces moyens de connexion comprennent en l'occurrence des plages de contact du type ISO 7816 (3, 6).

Selon une caractéristique d'un mode de réalisation de l'invention, on prévoit des moyens alternatifs d'alimentation b3 du composant indépendamment de la batterie B1 de l'appareil de télécommunication hôte ; Ces moyens alternatifs sont configurés pour pallier une éventuelle insuffisance de courant / tension d'alimentation du composant SIM provenant du champ électromagnétique.

Le composant est ici une puce d'identification d'abonné mais pourrait être tout ou partie de circuit d'un appareil associé.

Le circuit 2 (CLF) est conçu pour fournir une tension normalisée à la puce SIM comprise entre 1,8 et 3 Volts.

Le moyen de connexion 3 est en fait dans l'exemple un moyen d'interconnexion (I) qui comporte un premier connecteur 13 pour connecter le contrôleur NFC (2) ; D'autre part, le moyen d'interconnexion comporte aussi un second connecteur (3, 6) pour connecter un module d'identification d'abonné (SIM) et le connecteur 10 de l'appareil de télécommunication portable 5.

Selon un autre mode de réalisation (fig.4), le dispositif de communication radiofréquence F2 comprend :
- un composant à circuit intégré (SIM) et/ou des moyens de connexion 3, 6 à ce composant SIM pour au moins l'alimenter en courant / tension ;
- des moyens de connexion 3, 6, à une première source d'énergie B1 comprenant une batterie et/ou une seconde source T mettant en oeuvre un champ électromagnétique RF 14443;
- un mode de fonctionnement EC en émulation carte sans contact ou un fonctionnement radiofréquence équivalent,
- des moyens de gestion d'alimentation 2, 4 du composant selon ce mode, configurés pour couper l'alimentation provenant de ladite première source d'énergie B1 et pour fournir à la place une alimentation provenant de ladite seconde source T externe. Cette source émet un champ électromagnétique (RF 14443) à travers une antenne émettrice A2.

Selon une caractéristique de ce mode de réalisation, le dispositif F2 comprend :
- une troisième source d'énergie b3 telle une batterie secondaire ou annexe ou au moins une capacité C3 (non représentée) pour l'alimentation directe du composant SIM dans ledit mode (EC),
- des moyens directs 23 (par exemple, un fil conducteur) pour la fourniture d'alimentation au composant par cette troisième source d'énergie b3 en cas d'une alimentation du composant insuffisante ou non pourvue par ladite seconde source (T) pendant une communication radiofréquence RF.

Les moyens directs 23 de fourniture d'alimentation peuvent comprendre dans un exemple simple, une simple connexion directe pour l'alimentation électrique au composant SIM reliant la source b3 et/ou c3 au composant (SIM).

La batterie annexe est du type souple et plat d'environ 300 µm d'épaisseur. Elle peut être fixée sur le dispositif NFC souple, par exemple au niveau de la surface interne de l'antenne A1 (fig. 3). Avantageusement, la batterie souple ne couvre pas entièrement la surface de couplage de l'antenne A1 pour maintenir un bon couplage radiofréquence.

Selon une caractéristique de l'invention, les moyens alternatifs d'alimentation b3, C3 sont rechargeables. Dans l'exemple, ils sont ici rechargeables par la batterie principale B1. Toutefois, d'autres modes de rechargement sont possibles directement ou par exemple via des capteurs photovoltaïques, etc.

Le dispositif comporte donc à cet effet un circuit de charge 24 ou gestionnaire de charge et/ou décharge de la batterie annexe b3 ou C3.

Ce circuit 24 est relié directement à la batterie principale B1 par une connexion 25 pour y puiser l'énergie de charge.

De préférence, le dispositif F2 peut comprendre une diode 26 ou équivalente pour délivrer une tension atténuée par rapport à celle délivrée par la batterie b3; L'atténuation est ici de 0,4 Volts ; La diode est disposée sur la liaison 23 avant de connecter le module SIM.

Grâce à cette diode, le circuit de gestion de décharge délivre une tension (1,9V) qui est juste au dessus de la tension minimale (1,8V) fournie par le contrôleur CLF (2). La batterie annexe b3 délivre une tension régulée de 2,3 V à travers le gestionnaire de décharge 24.

A la figure 5, un circuit additionnel d'alimentation 30 comprend la batterie annexe souple et l'électronique de gestion de charge / décharge 34 et la diode 26. Ce circuit additionnel est intimement fixé au dispositif NFC souple.

Dans la description, les mêmes références désignent des composants identiques ou similaires.

Selon une caractéristique d'un mode de réalisation, le dispositif comprend un contrôleur 2 (NFC), une connexion directe entre des moyens alternatifs d'alimentation et le composant (SIM), un circuit de détection du champ (27), un circuit de charge en mode normal, un circuit de blocage de décharge en l'absence de champ électromagnétique (34).

Ce mode ci-dessus, est illustré par un exemple de la figure 5 ; Le circuit additionnel 20 comprend en outre un détecteur de champ électromagnétique 27 relié au gestionnaire d'alimentation de la carte SIM.

Le gestionnaire 34 a pour fonction de détecter la présence d'un champ radiofréquence et de permettre la décharge de la batterie b3 uniquement au cours d'une communication RF. A cet effet, le gestionnaire 34 peut comprendre au moins les fonctions du circuit 24 (fig.4), un programme chargé dans une mémoire programme d'un contrôleur du gestionnaire. La fonction ci-dessus peut être réalisée sous forme câblée. Le gestionnaire peut être un composant du type MAX11710. Selon cette fonction, la décharge de la batterie est bloquée quand il n'y a pas de champ radiofréquence. Le circuit 34 peut comprendre notamment une porte logique ou par un interrupteur électromagnétique ou un relais qui isole la batterie b3 de la SIM. Cela permet de ne pas décharger la batterie ou capacité(s) C3 inutilement par un courant de fuite éventuel.

Lorsqu'un champ suffisant de communication est détecté, la décharge de la batterie et/ou capacité(s) est autorisée pour alimenter la SIM.

Ce gestionnaire peut comprendre des moyens configurés pour permettre une charge de la batterie b3 et/ou capacité(s) C3 notamment quand l'appareil est sous tension et/ou empêcher sa décharge en absence de communication radiofréquence RF.

Les moyens alternatifs d'alimentation b3, c3 peuvent intervenir en support ou en substitution d'alimentation du composant (SIM) en cas de détection d'une insuffisance de courant / tension à leur borne. Il peut également intervenir en cas de détection d'un mode de fonctionnement dans lequel l'alimentation en courant est pourvue par le champ électromagnétique RF tel le mode émulation carte EC.

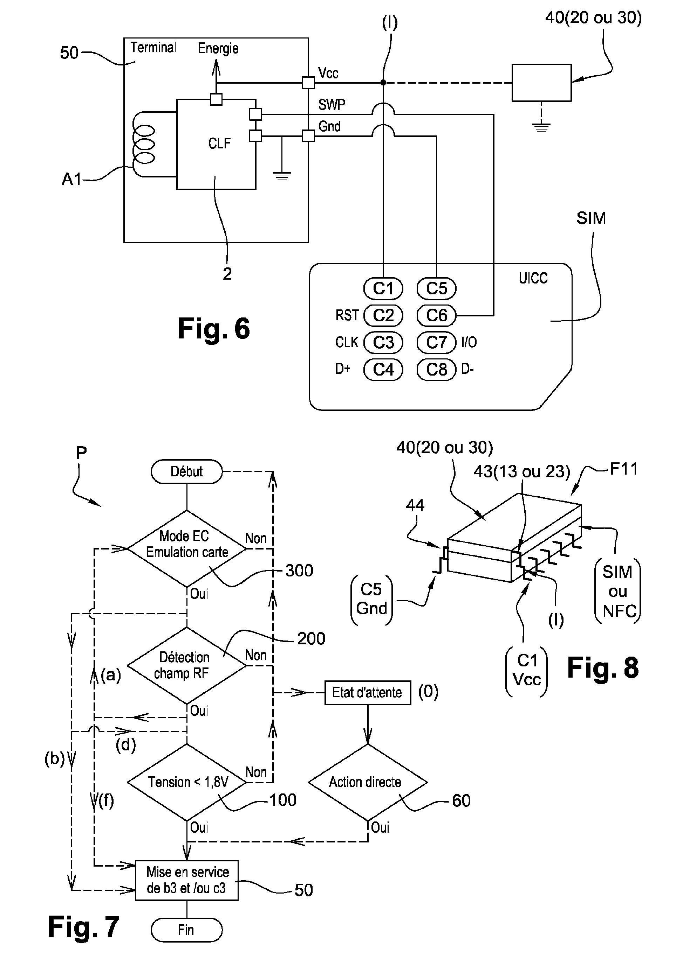

La figure 6 illustre un appareil de communication 50 comprenant un circuit 2 (NFC ou CLF) en relation de communication et d'alimentation électrique avec une carte SIM ou UICC (acronyme anglais d'universal integrated circuit card) conforme au standard ISO/IEC 14443.

Le composant UICC ou la puce électronique correspondante peut être amovible ou soudée dans l'appareil. La communication entre la SIM et le contrôleur CLF s'effectue par liaison de type SWP. Le contrôleur CLF peut être prévu d'usine dans cet appareil.

L'appareil peut comprendre, en montage d'usine ou de manière amovible, au point de jonction (I) à la SIM, le circuit additionnel 40 de l'invention, conforme aux circuits 20 ou 30 des figures 4 ou 5. Ce circuit est relié à la SIM par le point (I) correspondant au point « Vcc » du connecteur du mobile.

La figure 7 illustre des étapes préférée du procédé de communication radiofréquence mises en oeuvre par les différents modes de réalisation précédents.

Ce procédé requiert au moins un composant électronique et des moyens de sélection d'une alimentation en courant de ce composant provenant d'un champ électromagnétique d'un lecteur externe.

Selon un premier mode préféré de mise en oeuvre, le procédé de l'invention comprend une étape d'alimentation alternative et directe du composant indépendamment d'une batterie principale. Cette alimentation est mise en oeuvre uniquement pour pallier une éventuelle insuffisance de courant ou tension d'alimentation du composant provenant du champ électromagnétique.

L'étape 50 illustre cette alimentation par une mise en service de la batterie complémentaire b3 ou d'au moins une capacité C3 dans les circuits 20, 30 ou 40.

Cette mise en service peut être déclenchée de plusieurs manières individuelles ou cumulatives les unes avec les autres selon différentes variantes décrites ci-après. Ainsi, la mise en service peut être déclenchée par une étape 60 d'action directe, effectuée par exemple manuellement, sur un interrupteur (non représenté) installé sur une connexion 23 (fig. 4) reliant b3 ou c3 directement au composant notamment au point (I). Cet interrupteur peut être logé dans ou constitué également fonctionnellement par le composant 34.

A l'étape 100, le procédé comprend une étape de détection d'un besoin de courant qui intervient quand une tension aux bornes de la SIM est inférieure à 1,8V ou 1,9 V ; Dans le cas positif, la mise en service de la batterie b3 ou capacité C3 intervient. Dans le cas négatif, le programme se reboucle sur 200, 300 ou se met dans un état d'attente ou stationnaire (0) .

La détection 100 peut être simplement physique du fait d'un état de différence de potentiels au point (I) entre les connexions 13 et 23.

A l'étape 200, un champ radiofréquence est détecté, notamment par un détecteur 27 comprenant une bobine et étant relié au gestionnaire 34 ; Ce détecteur est configuré pour transmettre, par exemple sous forme logique, un état haut ou bas au gestionnaire 34 selon une présence ou non d'un champ radiofréquence ayant des caractéristiques attendues; cette détection est mise en oeuvre par le circuit 27 de la figure 5.

En cas de présence de champ, le programme peut se reboucler directement sur l'opération 50 (chemin f) ou sur l'étape 300 (chemin a) ou alternativement selon un autre mode de fonctionnement, sur le test 100 décrit précédemment

Dans le cas contraire, absence de champ (non), le programme peut se reboucler sur un test (300) ou se mettre en attente (0).

A l'étape 300, le procédé comprend une étape de détection d'un mode de fonctionnement en émulation carte sans contact (EC). Ce mode peut être déclenché de différentes manières notamment par défaut, par action volontaire, par protocole de communication dans le cas notamment d'échanges entre téléphones portables en communication dite « Peer to Peer »), dans le cas où la batterie est absente, déchargée ou désactivée lors d'une mise hors tension de l'appareil 5.

Dans le cas positif (Oui), le programme peut se brancher directement sur l'opération 50 de mise en service d'une alimentation alternative b3, C3 (chemin b) ; Il peut alternativement se brancher sur au moins un test supplémentaire 100 (détection de tension < 1,8V) (chemin d) et/ou sur le test 200 (détection de champ RF) ;

Dans le cas contraire (absence de champ), le programme ou procédé reboucle au début ou à un état d'attente (0) ou à l'un des autres tests (100, 200, 300).

Selon une autre mise en oeuvre plus générale du procédé, le procédé de communication radiofréquence avec un dispositif possède un mode d'émulation carte sans-contact (EC) ou configuration équivalente.

Le procédé met en oeuvre une étape de communication dans un mode d'émulation (EC) carte sans-contact ou configuration équivalente, ledit mode présentant une configuration d'alimentation du composant (SIM) par une source d'origine électromagnétique en substitution d'une première source (B1) comprenant une batterie ;

Le procédé se distingue en ce qu'il comprend :
- une étape selon laquelle le composant est pourvu d'une source l'alimentation alternative, telle une batterie ou au moins une capacité,
- une étape de maintien d'un niveau d'alimentation en courant du composant par ladite source alternative, directement auprès de lui, dans le cas d'un besoin de courant d'alimentation au cours d'une communication radiofréquence.

Le dispositif est de préférence un téléphone mobile alimentant un circuit NFC par batterie B1 et le composant est de préférence un module d'identification d'abonné, telle une carte SIM et/ou un circuit NFC. Le composant NFC peut être logé dans la carte SIM ou une autre carte telle une carte SD ou micro SD. La carte micro SD peut donc comprendre aussi une batterie b3 et/ou des capacités c3 conformes à l'invention avec les circuits de gestion 20, 30 ou 40.

A la figure 8, est illustré un mode de réalisation de l'invention sous forme d'au moins un composant électronique F11. Le circuit 40 est miniaturisé et se trouve agencé de manière compacte sur un composant électronique à alimenter (SIM), par exemple selon le mode EC.

Le composant (SIM) est ici sous forme CMS (composant monté en surface) de forme parallélépipédique ; Il comprend les connexions ou pattes électriques C1 à C5 correspondant aux plages de contact d'une carte à puce.

Le circuit 40 est compacté aux dimensions de la surface du composant CMS également sous forme de composant CMS avec au moins 2 pattes de connexion 43, 44 correspondants respectivement à la connexion 23 et à la masse. Ces deux pattes sont ici reliées notamment par soudure aux pattes C5 et C1 de la SIM.

Alternativement, le composant (SIM) peut être remplacé par le composant (NFC), l'élément 40 comprend alors l'un des circuits 20 ou 30 comportant notamment la batterie annexe b3 ou capacité C3, le gestionnaire d'alimentation 24 ou 34. Les pattes C1 - C5 sont adaptées en conséquence aux connexions nécessaires du composant 2 (NFC). Dans ce cas la patte 43 correspond à la connexion 23 du gestionnaire 24, 34 (fig. 4 ou 5).

Ainsi, l'invention propose un composant F11 notamment NFC doté d'une source autonome d'énergie intégrée ou juxtaposée pour délivrer de l'énergie immédiatement à un composant à alimenter, tel une carte SIM sans attendre une transformation d'une énergie d'origine électromagnétique qui peut comporter une défaillance ou insuffisance.

L'invention permet de délivrer une tension plus calibrée /stabilisée en cas de transformation et fourniture d'énergie par champ radiofréquence.

Selon d'autres fonctionnalités, l'invention prévoit un ou plusieurs modes d'assistance à la batterie principale du système NFC ; Ces modes peuvent être concrétisé(s) par un programme d'assistance (AS) dans le contrôleur NFC et un port I/O relié au gestionnaire d'alimentation 24 du ou des composants ; Ces modes peuvent être configurées pour fournir une information de champ radiofréquence présent et énergie de batterie principale absente. Un signal sur ce port est exploité par le moyen gestionnaire d'alimentation alternative 24, 34 pour la mise en service de la batterie ou capacité alternative pour alimenter le composant ou tout autre composant ou circuit.

Selon une variante de réalisation, l'invention prévoit que le contrôleur NFC délivre lui-même l'information de présence de champ détecté par sa propre antenne A1 (dans ce cas, le moyen 27 de la figure 5 est inutile, sa fonction étant réalisée par le contrôleur NFC) ; Le contrôleur NFC peut délivrer une information de batterie déchargée ou absente ou hors service. Dans ce cas, on prévoit une configuration dans laquelle au moins un port I/O soit maintenu opérationnel contrairement à la configuration actuelle des contrôleurs. L'invention prévoit une adaptation dans ce sens du micro logiciel actuel de fonctionnement du contrôleur NFC car dans l'art antérieur, les ports I/O du contrôleur NFC sont inactifs dans le cas d'absence de batterie principale ou mode de non alimentation du contrôleur NFC par la batterie principale.

Le gestionnaire 24 ou 34 peut être intégré dans le contrôleur NFC de manière à délivrer de l'énergie alternative au composant (SIM). L'information délivrée sur son port I/O ci-dessus peut alors être directement dirigée en interne vers le gestionnaire 24, 34 tel qu'intégré.

L'invention prévoit un contrôleur NFC doté d'un dispositif de détection de champ (comme 27), ce qui impose de fonctionner en 3V pour la SIM en mode batterie activée. (Dans ce cas, il n'y a pas de courant tiré de la source alternative quand le champ radiofréquence est présent et le téléphone est allumé).

Ainsi, le contrôleur NFC peut être configuré pour délivrer ou exploiter une information de présence de champ et/ou information relative à un niveau d " énergie de batterie principale absent ou présent de manière à mettre ou pas en service la source alternative pour alimenter le composant.

## Revendications

1. Dispositif de communication radiofréquence (F1) comportant:
- des moyens de connexion (3) connectant ou destinés à connecter électriquement un composant à circuit intégré (SIM),
- des moyens de sélection (2, 4) pour sélectionner une alimentation en courant d'origine électromagnétique (RF) de ce composant,
**caractérisé en ce qu'**il comprend une source alternative d'alimentation (b3, c3) pour une alimentation directe du composant (SIM), ladite source alternative étant utilisée uniquement pour pallier une éventuelle insuffisance du courant d'alimentation d'origine électromagnétique reçu par le composant.

2. Dispositif de communication radiofréquence selon la revendication précédente, **caractérisé en ce qu'**il comprend :
- un mode (EC) de communication en émulation carte sans-contact ou configuration équivalente, ledit mode présentant une configuration d'alimentation du composant (SIM) par une source d'origine électromagnétique (RF) en substitution d'une première source (B1) comprenant une batterie principale,
- des moyens de maintien d'un niveau d'alimentation en courant du composant par ladite source alternative, directement auprès de lui, dans le cas d'un besoin de courant d'alimentation au cours d'une communication radiofréquence dans ce mode d'émulation (EC).

3. Dispositif selon l'une quelconque des revendications précédentes, **caractérisé en ce que** ladite source alternative comprend une batterie secondaire (b3) et/ou au moins une capacité (c3).

4. Dispositif selon l'une quelconque des revendications précédentes, **caractérisé en ce que** la source alternative (b3, c3) intervient en cas de détection d'un mode de fonctionnement dans lequel l'alimentation en courant est d'origine électromagnétique.

5. Dispositif selon l'une quelconque des revendications précédentes, **caractérisé en ce que** ledit composant (SIM) comprend un module d'identification d'abonné à un réseau de télécommunication ou une puce de circuit intégré ou une carte du type UICC.

6. Dispositif selon l'une quelconque des revendications précédentes, **caractérisé en ce que** le dispositif comprend un contrôleur NFC (2) et une connexion reliant ou destinée à relier le contrôleur NFC au composant (SIM) pour lui fournir une alimentation d'origine électromagnétique,
- une connexion directe (23) de la source alternative (b3, c3) au composant (SIM) ou via un moyen gestionnaire de l'alimentation alternative (24) et/ou moyen de conditionnement (26) de ladite source alternative.

7. Dispositif selon l'une quelconque des revendications précédentes, **caractérisé en ce que** le dispositif comprend
- un moyen gestionnaire d'alimentation alternative (24, 34) pour gérer une alimentation directe alternative du composant (SIM),
- un circuit de charge de la source alternative connecté à la batterie principale
- un circuit de détection de champ électromagnétique intervenant avec ledit gestionnaire (24, 34) pour inhiber une décharge de la source alternative vers le composant (SIM) en l'absence de détection de champ électromagnétique et pour autoriser la décharge dans le cas contraire.

8. Dispositif selon l'une quelconque des revendications précédentes, **caractérisé en ce que** la batterie est du type flexible ou souple.

9. Dispositif selon l'une quelconque des revendications précédentes, **caractérisé en ce que** la batterie (b3) ou au moins la capacité (c3) est fixée sur une portion d'un dispositif NFC flexible (F1) comprenant l'antenne (A1).

10. Dispositif selon l'une quelconque des revendications précédentes, **caractérisé en ce qu'**il comporte un contrôleur NFC, des plots de connexion pour connecter d'une part une batterie principale d'alimentation d'un dispositif hôte et d'autre part un module d'identification d'abonné (SIM).

11. Dispositif selon l'une quelconque des revendications précédentes, **caractérisé en ce que** la batterie et/ou au moins la capacité et/ou ledit moyen gestionnaire d'alimentation alternative (24, 34) sont fixés ou intégrés à un composant électronique F11 comportant un contrôleur NFC et/ou un module d'identification d'abonné (SIM).

12. Dispositif de communication radiofréquence selon l'une des revendications précédentes, **caractérisé en ce que** le contrôleur NFC est configuré pour délivrer ou exploiter une information de présence de champ et/ou information relative à un niveau d'énergie de batterie principale absent ou présent de manière à mettre ou pas en service la source alternative pour alimenter le composant.

13. Procédé de communication radiofréquence mettant en oeuvre au moins un composant à circuit intégré (SIM) et des moyens de sélection (2, 4) d'une alimentation en courant d'origine électromagnétique pour alimenter ce composant, **caractérisé en ce qu'**il comprend une étape d'alimentation alternative directe du composant par une source alternative (b3, c3), ladite source alternative étant utilisée uniquement pour pallier une éventuelle insuffisance du courant d'alimentation d'origine électromagnétique auprès du composant.

14. Procédé de communication radiofréquence selon la revendication précédente, la communication s'effectuant dans un mode d'émulation (EC) carte sans-contact ou configuration équivalente, ledit mode présentant une configuration d'alimentation du composant (SIM) par une source d'origine électromagnétique en substitution d'une première source (B1) comprenant une batterie, **caractérisé en ce qu'**il comprend :
- une étape selon laquelle le composant est pourvu d'une source l'alimentation alternative (b3, c3), telle une batterie ou au moins une capacité,
- une étape de maintien d'un niveau d'alimentation en courant du composant par ladite source alternative, directement auprès de lui, dans le cas d'un besoin de courant d'alimentation au cours d'une communication radiofréquence.
